(19)

Europäisches Patentamt
European Patent Office
Office européen des brevets

(11) **EP 1 323 692 B1**

(12) **EUROPEAN PATENT SPECIFICATION**

(45) Date of publication and mention
of the grant of the patent:
**13.08.2014 Bulletin 2014/33**

(21) Application number: **03004773.2**

(22) Date of filing: **01.07.1999**

(51) Int Cl.:
*C05C 9/02* *(2006.01)*    *C05B 15/00* *(2006.01)*
*C05F 1/00* *(2006.01)*    *C05G 3/08* *(2006.01)*
*C05G 3/02* *(2006.01)*    *C05F 11/00* *(2006.01)*
*C05F 11/08* *(2006.01)*

(54) **Microgranular fertiliser composition for sowing and transplanting**

Mikrogranuläre Düngemittelzusammensetzung zur Anwendung während des Säens oder des Verpflanzens

Composition microgranulaire d'engrais pour applicaton pendant l'ensemencement ou la transplantation

(84) Designated Contracting States:
**AT BE CH CY DE DK ES FI FR GB GR IE IT LI LU MC NL PT SE**

(30) Priority: **02.07.1998 IT MI981521**

(43) Date of publication of application:
**02.07.2003 Bulletin 2003/27**

(62) Document number(s) of the earlier application(s) in accordance with Art. 76 EPC:
**99112549.3 / 0 968 980**

(73) Proprietor: **S.I.P.C.A.M. Società Italiana Prodotti Chimici e
Per L' Agricoltura Milano S.p.A
20123 Milan (IT)**

(72) Inventors:
• **Miele, Sergio
56123 Pisa (IT)**
• **Bargiacchi, Enrica
56124 Pisa (IT)**

(74) Representative: **Gislon, Gabriele
Marietti, Gislon e Trupiano S.r.l.
Via Larga 16
20122 Milano (IT)**

(56) References cited:
**CH-A- 340 243    CH-A- 536 072**

**DE-B- 1 008 326    DE-B- 1 035 169
DE-B- 1 242 644    DE-B1- 1 717 176
FR-A- 1 244 186    FR-A- 1 520 849
FR-A- 1 574 756    FR-A- 2 729 825
FR-A1- 2 097 025    FR-A1- 2 262 003
GB-A- 813 805    GB-A- 890 569
US-A- 4 571 256    US-A- 4 832 728
US-A- 5 021 247    US-A- 5 039 328**

• **DATABASE WPI Section Ch, Week 9503 Derwent Publications Ltd., London, GB; Class C04, AN 95-019107 XP002095228 & JP 06 305870 A (ISHIDA T), 1 November 1994 (1994-11-01)**
• **DATABASE WPI Section Ch, Week 9727 Derwent Publications Ltd., London, GB; Class C04, AN 97-294755 XP002095229 & JP 09 110564 A (URABE SANGYO KK), 28 April 1997 (1997-04-28)**
• **DATABASE WPI Section Ch, Week 198403 Derwent Publications Ltd., London, GB; Class C03, AN 1984-014899 XP002147120 & JP 58 208191 A (KYORITSU YUKI KOGYO KENKYUSHO), 3 December 1983 (1983-12-03)**
• **MIELE, SERGIO: "La concimazione localizzata: aspetti agromomici e technico applicativi", MACCHINE E MOTORI AGRICOLI, no. 12, 1 December 1984 (1984-12-01), page 19,42,43,**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

For some time now it has been a widespread practice to distribute fertilizers during sowing or transplanting of various agricultural crops in order to provide young plants with nutritional substances during a delicate and important stage of their growth.

This distribution may be performed either along the sowing or transplanting row or in more or less wide bands along these rows and may be carried out using both conventional granular fertilizers and liquid or fluid fertilizers.

Local manuring during sowing and transplanting has numerous advantages such as a better absorption of the nutritional substances present in sowing or transplanting beds which are essentially moist and at relatively low temperatures: the possibility of distributing smaller total quantities of fertilizers, because applied locally, therefore resulting in lower costs and a reduced risk of environmental pollution; the improved growth of the root system of the plants owing to specific and localized manuring; the reduced competition of weeds which, during sowing or transplanting, generally are not yet fully developed also because they are often controlled using suitable weed-killers.

Localized manuring during sowing or transplanting has, however, a few drawbacks of a technical nature which cannot be easily solved and which may be summarised as follows:

a) Slowing down of the sowing or transplanting operations due to the need to replenish the corresponding equipment with fertilizer which is applied in relatively large doses (100-150 kg/ha), said slowing down generally not being acceptable for agricultural concerns or contractors who must take advantage of well-defined periods during a season which is often subject to risk on account of the seasonal trends and rainfall;

b) Increased weight of the sowing or transplanting machines due to the additional weight of the said quantity of fertilizers. This increase in weight causes overloading of the sowing machines and the transplanting equipment, with serious drawbacks for the sowing or transplanting beds, in particular at the end of winter or on clayey ground and slopes, when it becomes difficult - if not impossible - to apply locally the fertilizers at the right depth and in the optimum quantities, with various irregular doses which adversely affect the simultaneous and uniform growth of the plant crops;

c) In the case where liquid or fluid fertilizers are used, the problem of correct dosing of small quantities thereof, which is sometimes accompanied by blockages of the nozzles, in particular when operating at low temperatures, with a consequent increase in the viscosity of the products;

d) The difficulty, for certain crops, of locally applying some types of nitrogenous fertilizers (for example those with a high ammonia nitrogen content) which could result in the risk of plant poisoning;

e) Finally, the possibility that the deficiency of certain micro-elements (such as zinc) may become more pronounced due to antagonism (for example if phosphorus alone is applied locally).

FR 1520849 discloses the use of Thomas phosphates in combination with urea. The problem discussed in this document is to provide a composition suitable to be used in the soil and having a very high disintegration speed. The solution proposed by this document is to use two different compounds as granules having reduced dimensions and suitable to be quickly disintegrated.

US 5039328 discloses a granular slow-release nitrogen fertilizer based on urea-aldehyde condensation compounds. The fertilizer granules have dimensions in the range of 0.5 to 6.0 mm and may contain smaller granules of urea-isobutyraldehyde.

It has now been unexpectedly found that it is possible to prepare a fertilizer composition for use during sowing or transplanting, which has numerous application advantages and which limits considerably the impact of the above mentioned drawbacks. The invention relates to a composition according to claim 1.

It has been noted in fact that, in the case of the most widely used granular fertilizer compositions, suitable for local application, in the past exclusively granules with a diameter greater than 2.0 mm were used and it has been surprisingly found that brilliant results may be obtained by preparing new fertilizer formulations in the form of granules with much smaller dimensions, within the range of 0.1 to 1.5 mm, based on an association of a selected organic fraction with a mineral fraction.

It has also been found that granules with an average diameter of between 0.3 and 1.2 mm, more preferably between 0.5 and 1 mm, are particularly suitable for local application during sowing or transplanting.

In accordance with an aspect of the present invention, a fertilizer composition in the form of granules for local application during sowing or transplanting of agricultural crops, in which said granules have an average particle size analysis (granulometry) of between 0.1 and 1.5 mm, is provided, said composition comprising an organic nitrogenous substance of synthetic origin, and a phosphate or phospho-nitrogen compound.

In accordance with another aspect of the present invention a fertilizer composition in the form of granules, for local application during sowing or transplanting of agricultural crops, in which said granules have an average particle size analysis (granulometry) of between 0.1 and 1.5 mm, is provided, said composition comprising an organic nitrogenous component of natural origin and a phosphate or phospho-nitrogen compound.

A particularly suitable organic fraction consists of an organic nitrogenous component able to supply organic nitrogen in a form which can be readily assimilated by the crops. More specifically two highly effective organic nitrogenous components, which can be used individually or in combination, have been defined and selected, the first being an organic nitrogenous substance of synthetic or natural origin and the second being a slow-release organic nitrogenous substance produced by synthesis. Advantageously, in a composition according to the invention, the two organic nitrogenous components are present in predefined ratios, for example 50:50, 25:75 and 75:25.

It therefore is an object of the present invention a fertilizer composition according to claim 1.

The microgranular fertilizers of the composition in question may be various mixtures of the active substances mentioned above, which are mixed in various ratios and contain the following group of nutritional substances:

A: Nitrogen of natural origin or synthetic nitrogen, also with a slow releasing ation;
B: Phosphoric anhydride of mineral origin or natural organic origin;
C: Secondary elements (Ca, Mg, S) and micro-elements (Zn, Mn, Fe, Cu, Co, Mo); D: All with the addition, if necessary, of potassium manures and/or plant protection agents or substances with a biological action and/or adjuvants or inert substances.

The following mixtures will therefore be possible:

## A+B, A+B+C, A+B+D, A+B+C+D.

Organic nitrogenous substances of natural origin which are particularly suitable are chosen from the group comprising dried blood, meat meal, hydrolyzed animal epithelium, crustacean chitin, chrysalis meal, horn and hoof meal and wildfowl feathers and mixtures thereof, among these degreased and dried animal blood being preferred.

Animal blood, degreased and dried, is advantageously produced using the technique of spray drying performed according to what disclosed in parent application EP 99112549.3, published as EP-A-968980, i.e. at high temperatures and pressures, but for short times and with large volumes of air, so as to obtain a product with a nitrogen content higher than 13%, a moisture content of less than 7% and a water solubility greater than 85%.

Advantageously the slow-release organic nitrogenous substance produced by synthesis is a compound based on urea condensed with aldehyde, preferably an aldehyde with 1 to 6 C atoms. In accordance with a preferred embodiment, said aldehyde is formaldehyde.

The phosphate and phospho-nitrogen compounds of mineral origin for use in microgranular fertilizers according to the invention may all be compounds containing more or less soluble phosphoric anhydride, such as for example ammonium or potassium phosphates, ammonium polyphosphates, urea/phosphoric acid adducts, superphosphates, ground or partially soluble natural phosphorites, calcium and aluminium phosphate, thermal phosphates or dephosphorylation waste. The phospho-nitrogen compounds of natural origin may be fish meal, bone meal and dried chicken droppings.

The nitrogenous or phosphate or phospho-nitrogen compounds indicated above are mixed together in suitable proportions so that the total nitrogen is within the range from 1% to 35% by weight and the phosphoric anhydride is within the range from 50 to 5% by weight with respect to the total weight of the composition.

The composition according to the invention may further include one or more potassium salts, including chloride, sulphate, or potassium phosphate salts and also potassium sulphates with magnesium salts and unrefined, optionally enriched potassium salts.

Advantageously, the composition of the invention comprises further compounds such as oxides, carbonates, sulphates and nitrates of calcium, calcium and magnesium, magnesium or sulphur in various forms of crystallization.

Further micro-elements optionally contained are zinc, manganese, iron, copper, cobalt and molybdenum oxides, salts, chelates and various organic complexes. Said micro-elements, except for zinc, may be present in the microgranular formulations in the most varied concentration ratios. In the case of zinc, in particular, the useful concentration ranges are those corresponding to Zn levels of 0 to 70, 12 being excluded.

In accordance with a preferred embodiment, the composition includes one or more plant protection agents such as:

- insecticides or systemic nematocides (for example chloronicotinyl compounds, such as nitepyram, thiacloprid, TI-435, etc.;
- carbamates and pro-carbamates, such as: carbofuran, benfuracarb, carbosulfan, furathiocarb; carbamoyloximes, such as aldicarb or oxamyl; phosphoric esters, such as disulfoton, phorate, terbufos, etc.); insectides or contact nematocides (for example various phosphoric esters, such as parathion, diazinon, chlorpyrifos, tebupyrimfos; ethoprofos, phenamifos, cadusafos, fosthiazate, etc.; pyrethroids which are stable in the ground, such as for example tefluthrin; organic chlorinated compounds, such as lindane; pyrazolic compounds, such as fipronil, etc.); systemic fungicides (for example, oxatiines such as carboxin; benzimidazoles or thiophenates; various carboxamides; phenylamides, such as for example: metalaxyl, benalaxyl, etc.; various triazoles and imidazoles; phenylpyrroles such as cyprodinil, etc.; aluminium phosetyl, propamocarb, cimoxanyl); contact fungicides (for example dithiocarbamates, such as maneb or mancozeb, phthalimides, such as for example captane, hymexazole, etridazole, etc.) or selective herbicides for suitable crops which may be used during pre-sowing or pre-transplanting with incorporation in the ground.

Any substances with a biological action may be incorporated in the microgranular fertilizer composition according to the invention, such as, for example, urease inhibitors, nitrification retardants, or various organisms, including rhizobia or azospirilla or thiobacteria.

In order to complete and aggregate the microgranular fertilizers according to the invention, inert substances or various adjuvants may be added, such as inorganic substances (for example various silicas and silicates, various sulphates and carbonates), various synthetic or organic substances (for example, leonardite, soluble humates and humic acid extracts, cellulose derivatives, lignin or various carbohydrates and polymers of vegetable or synthetic origin).

In particular, the presence of a derivative of humic acid, such as soluble humates and humic acid extracts and/or derivatives of lignin and various polymers of vegetable or synthetic origin, not only have an aggregating action during formulation, but also favour rapid and complete dissolving of the microgranule in the ground, owing to the increase in its wettability and surface activity.

From this point of view, the adjuvants mentioned therefore constitute a component which helps improve significantly the physico-chemical characteristics and the agronomical efficiency of the microgranular fertilizers in question.

The compositions according to the present invention result in a marked starter effect which expresses itself in the form of an increased rate of growth of the young plant which, in these conditions, will also have a greener coloured epigeal apparatus. All this is due to a synergic effect of the two fractions, i.e. the organic fraction and the mineral fraction, which together, in the ratios provided and because of the particular particle size distribution of the fertilizer, achieve better results as regards the initial growth of the crops, the seeds or the plants of which are making use of these innovative fertilizers. The crops so treated clearly benefit from said effect, performing better during the first stage of growth both in the case of sown crops and transplanted crops (starter effect).

The microgranular fertilizing compositions of the invention may be applied during sowing or during transplanting of various crops, usually by using special equipment combined with the sowing machines or the transplanting machines, so as to be able to perform, in a single pass, both sowing or transplanting and local application of the microgranules, or local application of the microgranules may be performed manually, in particular for some transplanted crops.

This local application will be performed along the sowing row together with the seed or slightly below or to one side thereof or along the transplanting row and also below the plants or to one side thereof.

In accordance with a further aspect of the present invention, the use of a composition of the type described above, as a fertilizer for plant and tree crops, including vines, is envisaged. The crops concerned are all plant crops, in particular industrial crops (for example sugar beet, tobacco, sugar cane, cotton, etc.), cereals (for example wheat, barley, maize, millet, rice, etc.), leguminous forage and seed plants (for example bean, runner bean, lucerne, clover, etc.), oil-producing crops (for example soya, rape, sunflower, peanuts, etc.) as well as market gardening plants, ornamental plants and various grass lawns. Vines and tree crops (stone-fruit, pomaceous and all other wood and fruit varieties) are involved during planting of the young plants.

The application doses may vary between a minimum of 10 kg/ha up to a maximum of 100 kg/ha of localized microgranular fertilizers, depending on the type of crop, the planting arrangements and the agronomic applicational requirements.

By using these small doses of microgranular fertilizers, there is the possibility of avoiding the drawbacks which are typical of the use of large doses during sowing and transplanting, for example compacting of the ground owing to the excessive weight of the hoppers of the distribution machines and the possible irregular application of granules in the ground, with local accumulations which have a poisonous effect on the plants and with zones which are not manured and therefore less productive.

Small doses of microgranular fertilizers are moreover less costly and therefore considerable economic advantages arise.

The preparation of the microgranular fertilizers according to the present invention may be obtained for example using first of all mixers of various types in which the components, both in solid powder form and liquid form, are mixed, the latter sprayed, if necessary, in rotating drums to have a more uniform distribution. Microgranulation follows with possible final drying, and with sifting and recycling of the microgranules which have a diameter greater or smaller than that required.

The granulation step is performed preferably with the help of additives which facilitate both the granulation process and the subsequent dispersion of the microgranule following its agricultural application.

The examples given below are purely indicative, without limiting in any way the application possibilities of the invention.

Preparation Example No. 1 (Comparative)

54.5 kg of ammonium hydrogen phosphate in powder form, 26 kg of degreased blood dried using the method described above, in powder form, and 17.5 kg of zinc oxide in powder form are mixed together in a powder mixer. After mixing, the mixture is introduced into a rotating granulator into which a certain quantity of water is sprayed so as to obtain, after drying and sifting, a microgranular fertilizer which has granules with dimensions of between 0.5 and 1 mm. Any smaller or larger size granules are recycled to a subsequent charge with the same composition.

Preparation Example No. 2 (Comparative)

The same procedure as in Example 1 is followed, mixing together 23 kg of dried blood in powder form, degreased and dried using the method indicated above, 10 kg of ammonium hydrogen phosphate in powder form, 24 kg of potassium sulphate, 7 kg of magnesium sulphate, 15 kg of ferrous sulphate in powder form, 1 kg of soluble humates obtained from leonardite, 20 kg of calcium sulphate hydrate. After moistening, drying and sifting, a microgranular fertilizer with granules having dimensions of between 0.5 and 1 mm is obtained.

Preparation Example No. 3

The same procedure as in Example 1 is followed, except that the 26 kg of blood in powder form is replaced by 15 kg of methyleneurea containing 30% slow-releasing nitrogen, 5 kg of ferrous sulphate and 6 kg of potassium sulphate. After moistening, drying and sifting, a microgranular fertilizer with granules having dimensions of between 0.5 and 1 mm is obtained.

Application Example No. 1 (Comparative)

Application is performed over 12 fields assigned for the sowing of sugar beet and comprising different types of terrain, where the following are compared: a reference field manured using the conventional technique, with the distribution, during pre-sowing, over the whole field, of 150 kg/ha of P2O5 in the form of inorganic superphosphate and various plots manured, during pre-sowing, over the whole area, with 100 kg/ha of P205 in the form of inorganic superphosphate, dividing up these plots into 3 sub-plots manured, during sowing, respectively with 10, 30 and 60 kg/ha of microgranular fertilizer obtained following the steps indicated in Preparation example 1. This microgranular fertilizer is distributed during sowing using special sowing machines provided with a granule-spreading hopper so as to apply it locally in the vicinity of the seed, along the sowing row.

When the beet was harvested, the following mean results obtained in the 12 test fields were obtained:

| TONS/HA (OF SACCHAROSE/ ROOT) | INORGANIC SUPERPHOSPHATE DISTRIBUTED DURING PRE-SOWING OVER WHOLE FIELD (150 KG/HA OF $P_2O_5$) | INORGANIC SUPERPHOSPHATE DISTRIBUTED DURING PRE-SOWING OVER WHOLE FIELD (100 KG/HA OF $P_2O_5$) + SUBSEQUENT DISTRIBUTION OF MICROGRANULAR FERTILIZER ACCORDING TO EXAMPLE 1 LOCALLY APPLIED WITH SEED IN VARIOUS DOSES (KG/HA) | | |
|---|---|---|---|---|
| | | 10 | 30 | 60 |
| MEAN YIELD OF ROOTS | 54.4 | 55.00 | 57.54 | 58.60 |
| MEAN YIELD OF SACCHAROSE | 8.17 | 8.20 | 8.63 | 8.98 |

It should be noted how use of the microgranular fertilizer according to the invention, applied locally during sowing, is able to achieve a level of production which is much greater than that which can be obtained using a conventional granular fertilizer, applied during pre-sowing even with much higher doses of $P_2O_5$.

| | WEIGHT OF GRAIN IN GRAMS FOR EVERY 20 MAIZE PLANTS | CORRESPONDING HARVEST (REFERENCE = 100) |
|---|---|---|
| MICROGRANULAR FERTILIZER ACCOR-DING TO EXAMPLE 1 IN DOSES OF 30 KG/HA | 815 | 154.6 |
| UNTREATED REFERENCE PLOT | 528 | 100.0 |
| MICROGRANULAR FERTILIZER ACCOR-DING 893 TO EXAMPLE 2 IN DOSES OF 30 KG/HA | 893 | 136.5 |
| UNTREATED REFERENCE PLOT | 654 | 100.0 |
| MICROGRANULAR FERTILIZER ACCORDING 880 TO EXAMPLE 3 IN DOSES OF 30 KG/HA | 880 | 148.9 |
| UNTREATED REFERENCE PLOT | 591 | 100.0 |

Application Example No. 2

Application is performed in fields assigned for the sowing of maize, using equipment for distributing microgranules mounted on sowing machines, so as to apply locally together also the microgranular fertilizers produced in accordance with the procedure indicated in the Preparation Examples Nos. 1, 2 and 3.

These microgranular fertilizers are used both in doses of 30 kg/ha and are compared with untreated reference plots in three different fields.

Upon harvesting, the following results were observed:

It can be noticed that the use of the microgranular fertilizers according to the invention is able to increase substantially the productivity of the crops, also when using small doses of fertilizers.

**Claims**

1. A fertilizer composition in the form of granules for local application during sowing or transplanting, comprising the following nutritional substances:

    a nitrogen containing substance of synthetic origin, also with a slow release action, and a phosphoric anhydride containing substance of inorganic origin,
    **characterized in that** said phosphoric anhydride is contained in phospho-nitrogen compounds, the total nitrogen content is in the range of 1% to 35% by weight, the phosphoric anhydride content is within the range of 50% to 5% with respect to the total weight of the composition, and **in that** the granules of said composition have a size within the range of 0.1 mm to 1.5 mm and an average diameter within the range of 0.5 mm to 1 mm.

2. A fertilizer composition according to claim 1, *wherein said* slow-release nitrogen containing compound is a product of condensation of urea with an aldehyde.

3. A fertilizer composition according to claim 2, wherein said aldehyde is formaldehyde.

4. A fertilizer composition according to any previous claim, further comprising one or more potassium salts.

5. A fertilizer composition according to any claim 1 to 4, wherein said phospho-nitrogen compound is selected from ammonium phosphates, ammonium polyphosphates.

6. A fertilizer composition according to any previous claim, further comprising oxides, salts, chelates, and various organic complexes of microelements selected from zinc, manganese, iron, copper, cobalt and molybdenum.

7. A fertilizer composition according to any previous claim, further comprising one or more plant protection agents selected from: insecticides, systemic and contact nematocides, systemic and contact fungicides and selective herbicides.

8. A fertilizer composition according to any previous claim, further comprising one or more *substances* having a biological *action*, selected from microorganisms, urease inhibitors or nitrification retardants.

9. A fertilizer composition according to Claim 8, wherein said microorganisms are selected from rhizobia, azospirilla, thiobacteria.

10. A fertilizer composition according to any previous claim, comprising a phosphoric anhydride containing substance selected from: potassium phosphates, urea/phosphoric acid adducts, superphosphates, natural phosphorites, calcium and aluminium phosphate, thermal phosphates, dephosphorylation waste, fish meal, bone meal, dried chicken droppings and mixtures thereof.

11. A fertilizer composition according to any claim 1 to 10, further comprising one or more adjuvants selected from inert substances such as silica, silicates, sulphates and carbonates, and from synthetic or *organic substances* such as leonardite, soluble humates, humic acid extracts, cellulose derivatives, lignin, carbohydrates and polymers of vegetable or synthetic origin.

12. Use of a granular fertilizer composition according to any one of Claims 1 to 11 for local application of the granules of said composition during sowing together with the seeds to be sown.

13. Use of a granular fertilizer composition according to any one of Claims 1 to 11 for local application of the granules of said composition during transplanting, along a transplanting row.

**Patentansprüche**

1. Düngemittelzusammensetzung in der Form von Granulat für die örtliche Anwendung während der Aussaat oder der Umpflanzung, umfassend die folgenden Nährstoffsubstanzen:

   eine stickstoffhaltige Substanz synthetischen Ursprungs, auch mit einer Slow-Release-Wirkung, und eine Phosphorsäureanhydrid enthaltende Substanz anorganischen Ursprungs,
   **dadurch gekennzeichnet, dass** das Phosphorsäureanhydrid in Phosphor-Stickstoff-Verbindungen enthalten ist, wobei der Gesamtanteil des Stickstoffs im Bereich von 1 bis 35 Gew.-% liegt, wobei der Anteil an Phosphorsäureanhydrid im Bereich von 50 bis 5 Gew.-% in Bezug auf das Gesamtgewicht der Zusammensetzung liegt, und wobei das Granulat der Zusammensetzung eine Größe innerhalb des Bereiches von 0,1 bis 1,5 mm und einen durchschnittlichen Durchmesser innerhalb des Bereiches von 0,5 bis 1 mm aufweist.

2. Düngemittelzusammensetzung gemäß Anspruch 1, wobei die stickstoffhaltige Slow-Release-Verbindung ein Kondensationsprodukt von Harnstoff mit einem Aldehyd ist.

3. Düngemittelzusammensetzung gemäß Anspruch 2, wobei der Aldehyd Formaldehyd ist.

4. Düngemittelzusammensetzung gemäß einem der vorherigen Ansprüche, weiterhin umfassend ein oder mehrere Kaliumsalze.

5. Düngemittelzusammensetzung gemäß einem der Ansprüche 1 bis 4, wobei die Phosphor-Stickstoff-Verbindung aus Ammoniumphosphaten, Ammoniumpolyphosphaten ausgewählt ist.

6. Düngemittelzusammensetzung gemäß einem der vorherigen Ansprüche, weiterhin umfassend Oxide, Salze, Chelate und verschiedene organische Komplexe von Mikroelementen, ausgewählt aus Zink, Mangan, Eisen, Kupfer, Kobalt und Molybdän.

7. Düngemittelzusammensetzung gemäß einem der vorherigen Ansprüche, weiterhin umfassend ein oder mehrere Pflanzenschutzmittel, ausgewählt aus:

   Insektiziden, systemischen und Kontakt-Nematoziden, systemischen und Kontakt-Fungiziden und selektiven Herbiziden.

8. Düngemittelzusammensetzung gemäß einem der vorherigen Ansprüche, weiterhin umfassend eine oder mehrere Substanzen mit einer biologischen Wirkung, ausgewählt aus Mikroorganismen, Ureaseinhibitoren oder Nitrifikationshemmern.

9. Düngemittelzusammensetzung gemäß Anspruch 8, wobei die Mikroorganismen aus Rhizobia, Azospirilla, Thiobakterien ausgewählt sind.

10. Düngemittelzusammensetzung gemäß einem der vorherigen Ansprüche, umfassend eine Phosphorsäureanhydrid enthaltende Substanz, ausgewählt aus: Kaliumphosphaten, Harnstoff/Phosphorsäureaddukten, Superphosphaten, natürlichen Phosphoriten, Calcium- und Aluminiumphosphaten, thermischen Phosphaten, Dephosphorylierungsabfall, Fischmehl, Knochenmehl, getrocknetem Hühnerkot und Mischungen davon.

11. Düngemittelzusammensetzung gemäß einem der Ansprüche 1 bis 10, weiterhin umfassend eine oder mehrere Zusatzstoffe, ausgewählt aus inerten Substanzen, wie beispielsweise Kieselerde, Silikaten, Sulfaten und Carbonaten, und aus synthetischen oder organischen Substanzen, wie beispielsweise Leonardit, löslichen Humaten, Huminsäureextrakten, Zellulosederivaten, Lignin, Kohlenhydraten und Polymeren von pflanzlichem oder synthetischem Ursprung.

12. Verwendung einer Düngemittelzusammensetzung gemäß einem der Ansprüche 1 bis 11 für die örtliche Anwendung des Granulates der Zusammensetzung während der Aussaat zusammen mit dem zu säenden Saatgut.

13. Verwendung einer Düngemittelzusammensetzung gemäß einem der Ansprüche 1 bis 11 für die örtliche Anwendung des Granulates der Zusammensetzung während der Umpflanzung, entlang einer Umpflanzungsreihe.

## Revendications

1. Composition d'engrais sous la forme de granules pour l'application locale pendant l'ensemencement ou la transplantation, comprenant les substances nutritionnelles suivantes :

   une substance contenant de l'azote d'origine synthétique, présentant également une action de libération lente et une substance contenant un anhydride phosphorique d'origine inorganique, **caractérisée en ce que** ledit anhydride phosphorique est contenu dans des composés phosphoazotés, la teneur totale en azote étant de l'ordre de 1 % à 35 % en poids, la teneur en anhydride phosphorique est de l'ordre de 50 % à 5 % par rapport au poids total de la composition, et **en ce que** les granules de ladite composition ont une taille de l'ordre de 0,1 mm à 1,5 mm et un diamètre moyen de l'ordre de 0,5 mm à 1 mm.

2. Composition d'engrais selon la revendication 1, dans laquelle ledit composé contenant de l'azote à libération lente est un produit de condensation d'urée avec un aldéhyde.

3. Composition d'engrais selon la revendication 2, dans laquelle ledit aldéhyde est le formaldéhyde.

4. Composition d'engrais selon l'une quelconque des revendications précédentes, comprenant en outre un ou plusieurs sels de potassium.

5. Composition d'engrais selon l'une quelconque des revendications 1 à 4, dans laquelle ledit composé phospho-azoté est choisi parmi les phosphates d'ammonium, les polyphosphates d'ammonium.

6. Composition d'engrais selon l'une quelconque des revendications précédentes, comprenant en outre des oxydes, des sels, des chélateurs et divers complexes organiques de micro-éléments choisis parmi le zinc, le manganèse, le fer, le cuivre, le cobalt et le molybdène.

7. Composition d'engrais selon l'une quelconque des revendications précédentes, comprenant en outre un ou plusieurs agent de protection des plantes, choisis parmi les insecticides, les nématocides systémiques et de contact, les fongicides systémiques et de contact et les herbicides sélectifs.

8. Composition d'engrais selon l'une quelconque des revendications précédentes, comprenant en outre une ou plusieurs substances ayant une action biologique choisie parmi des microorganismes, des inhibiteurs de l'uréase ou des retardateurs de nitrification.

**9.** Composition d'engrais selon la revendication 8, dans laquelle lesdits microorganismes sont choisis parmi les rhizobium, azospirillum, thiobactéries.

**10.** Composition d'engrais selon l'une quelconque des revendications précédentes, comprenant une substance contenant un anhydride phosphorique, choisie parmi des phosphates de potassium, des adduits d'urée/acide phosphorique, des superphosphates, des phosphorites naturels, du calcium et des phosphates d'aluminium, des phosphates thermiques, des déchets de déphosphorylation, de la farine de poisson, de la farine d'os, des fientes de poulet séchées et leurs mélanges.

**11.** Composition d'engrais selon l'une quelconque des revendication 1 à 10, comprenant en outre un ou plusieurs adjuvants choisis parmi des substances inertes telles que la silice, des silicates, des sulfates et des carbonates et des substances synthétiques ou organiques telles que la léonardite, les humates solubles, des extraits d'acide humique, des dérivés de cellulose, de la lignine, des glucides et des polymères d'origine végétale ou synthétique.

**12.** Utilisation d'une composition d'engrais granulaire selon l'une quelconque des revendications 1 à 11, pour l'application locale des granules de ladite composition pendant l'ensemencement conjointement avec les graines à semer.

**13.** Utilisation d'une composition d'engrais granulaire selon l'une quelconque des revendications 1 à 11, pour l'application locale des granules de ladite composition pendant la transplantation, avec une rangée de transplantation.

**EP 1 323 692 B1**

**Patent documents cited in the description**

- FR 1520849
- US 5039328 A
- EP 99112549 A
- EP 968980 A